# EUROPÄISCHE PATENTSCHRIFT

(11) **EP 3 019 352 B1**
(45) Veröffentlichungstag und Bekanntmachung des Hinweises auf die Patenterteilung: **16.08.2017**
(21) Anmeldenummer: 14716570.8
(22) Anmeldetag: 10.04.2014
(51) Int. Cl.: B60C 15/06, B60C 19/08

(54) **FAHRZEUGLUFTREIFEN**
PNEUMATIC VEHICLE TYRE
PNEUMATIQUE DE VÉHICULE

(30) Priorität: 12.07.2013 DE 102013107385
(43) Veröffentlichungstag der Anmeldung: 18.05.2016
(73) Patentinhaber: Continental Reifen Deutschland GmbH, 30165 Hannover (DE)
(72) Erfinder: MOLDENHAUER, Patrick, 24149 Kiel (DE)
(74) Vertreter: Finger, Karsten
(86) Internationale Anmeldenummer: PCT/EP2014/057225
(87) Internationale Veröffentlichungsnummer: WO 2015/003825

(56) Entgegenhaltungen:
- EP-A1- 1 621 365
- EP-A1- 2 500 188
- EP-A2- 1 738 935

## Beschreibung

Die Erfindung betrifft einen Fahrzeugluftreifen in radialer Bauart mit zumindest einem Bauteil aus zumindest einer elektrisch nicht leitfähigen Gummimischung, mit Wulstbereichen mit Wulstkernen, einer um die Wulstkerne verlaufenden Karkasseinlage mit Hochschlägen, die sich Richtung Seitenwände erstrecken, mit einem Felgengummi, welcher die äußere Oberfläche des Wulstbereiches bildet, entlang des Karkasshochschlages verläuft und aus einem Felgengummiteil aus einer elektrisch nicht leitfähigen Gummimischung und einem Felgengummiteil aus einer elektrisch leitfähigen Gummimischung besteht, welcher zumindest einen im Reifen verlaufenden und elektrisch leitfähigen Bauteil, der eine elektrisch leitende Verbindung zur Außenseite des Reifens bildet oder mitbildet, mit der Felge verbindet.

Ein derartiger Fahrzeugluftreifen ist aus der EP 2 500 188 A1 bekannt. Jener Teil des Felgengummis, welcher aus der elektrisch leitfähigen Gummimischung besteht, verläuft als im Querschnitt schmaler Streifen entlang des Karkasshochschlages bis in den Bereich radial unterhalb des Wulstkernes. Der elektrisch nicht leitende Felgengummiteil überdeckt außenseitig zumindest teilweise den elektrisch leitfähigen Felgengummiteil und wird Richtung Laufstreifen von der Seitenwand überlappt. Im Reifen ist zwischen der Karkasseinlage bzw. dem Karkasshochschlag und der Seitenwand bzw. dem Felgengummi eine elektrisch leitfähige Gummischicht eingebaut, die im Laufstreifenbereich nach außen geführt ist und welche die elektrisch leitende Verbindung zwischen den mit der Fahrbahn in Kontakt tretenden Laufstreifen und der Felge herstellt. Eine derartige elektrisch leitende Verbindung ist bei Fahrzeugluftreifen, deren Laufstreifen und deren Seitenwände aus elektrisch nicht leitfähigen Gummimischungen bestehen, insbesondere aus Gummimischungen, die einen hohen Anteil an Kieselsäure beinhalten, erforderlich, um zu verhindern, dass sich das Fahrzeug während des Fahrbetriebes elektrostatisch auflädt. Kieselsäurehaltige Gummimischungen, insbesondere im Laufstreifen, verleihen dem Reifen an sich gute Fahreigenschaften, beispielsweise gute Nassrutscheigenschaften, und tragen zu einer Verminderung des Rollwiderstandes bei.

Aus der EP 1 621 365 A1 ist ein Fahrzeugluftreifen in radialer Bauart mit elektrisch nicht leitfähigen Felgengummis bekannt. Zumindest zwischen einer der Seitenwände und der Karkasseinlage verläuft zumindest ein elektrisch leitfähiger Kord, welcher zwischen dem Felgengummi und der Seitenwand nach aussen geführt ist und in Kontakt mit der Felge treten kann. Das andere Ende des elektrisch leitfähigen Kordes kontaktiert die elektrisch leitfähige Laufstreifenbase. Ein Fahrzeugluftreifen mit einem auf ähnliche Weise verlaufenden elektrisch leitfähigen Gummistreifen, der sich zwischen der Karkasseinlage und der Seitenwand zur Laufstreifenoberfläche erstreckt ist, aus der EP 1 738 935 A2 bekannt.

Der Erfindung liegt die Aufgabe zu Grunde, einen Reifen der eingangs genannten Art derart auszuführen, dass in den Wulstbereichen eine zuverlässige elektrisch leitfähige Verbindung durch den Felgengummi erhalten bleibt und gleichzeitig der Rollwiderstand des Reifens reduziert werden kann.

Gelöst wird die gestellte Aufgabe erfindungsgemäß dadurch, dass sich der elektrisch nicht leitende Felgengummiteil in Richtung Seitenwand über das Felgenhorn hinaus und in Kontakt mit diesem erstreckt und aus einer eine niedrige Hysterese aufweisenden Gummimischung besteht, wobei der elektrisch leitfähige Felgengummiteil die Wulstzehe mitbildet und mit der Wulstsitzfläche der Felge in Kontakt kommt.

Im Felgenhornbereich wird der Fahrzeugluftreifen beim Abrollen besonders stark, insbesondere auf Biegung, belastet. Eine Gummimischung niedriger Hysterese erzeugt in dem vom Felgenhorn beanspruchten Felgengummiteil weniger verformungsinduzierte Energieverluste als eine Gummimischung hoher Hysterese und trägt zu einer Reduktion des Rollwiderstandes bei. Der elektrisch leitfähige Felgengummiteil ist daher als massiver Teil ausgebildet, bildet die Wulstzehe mit und kommt mit der Wulstsitzfläche der Felge in Kontakt. Ein derart ausgeführter Felgengummiteil sorgt für eine besonders effektive Ableitung elektrostatischer Ladungen.

Um die Energieverluste in den vom Felgenhorn beanspruchten Felgengummiteil, welcher aus einer elektrisch nicht leitenden Gummimischung besteht, gering zu halten, ist es vorteilhaft, wenn der elektrisch nicht leitfähige Felgengummiteil eine Rückprallelastizität bei Raumtemperatur (gemäß DIN 53512) aufweist, die zwischen 40 % und 80 % beträgt.

Bei einer weiteren vorteilhaften Ausführungsform des elektrisch leitfähigen Felgengummiteils besitzt dieser eine Shore-Härte A ≥ 60, insbesondere ≥ 65. Dieser Felgengummiteil weist daher eine gute mechanische Festigkeit auf, was vor allem günstig ist, um Beschädigungen der Wulstbereiche bei der Montage des Fahrzeugluftreifens zu verhindern.

Der elektrisch leitfähige Bauteil, welcher über den elektrisch leitenden Felgengummiteil mit der Felge verbunden wird, kann die Karkassgummierung sein, welche aus einer elektrisch leitfähigen Gummimischung besteht, dieser Bauteil kann jedoch auch von den Karkassfäden der Karkasseinlage gebildet werden.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 einen Querschnitt durch einen der Wulstbereiche eines Fahrzeugluftreifens mit einer Ausführungsform der Erfindung und
Fig. 2 in einer analogen Schnittdarstellung zu Fig.1 eine nicht erfindungsgemäßen Ausführungsform.

Die Figuren zeigen jeweils einen der Wulstbereiche eines Fahrzeugluftreifens für Personenkraftwagen und daher die Innenschicht 2, einen Wulstkern 3, die Karkasseinlage 4, eine der Seitenwände 5, ein Kernprofil 6 und einen Felgengummi 7. Zu den nicht dargestellten und auf bekannte und übliche Weise ausführbaren Bestandteilen des Fahrzeugluftreifens gehören ein profilierter Laufstreifen und ein Gürtelverband, welcher aus mehreren Gürtellagen zusammengesetzt ist. In den Figuren ist ferner jener Teil einer Felge 1 dargestellt, welcher bei montiertem Reifen mit dem Wulstbereich des Reifens in Kontakt ist. Es sind daher das Felgenhorn 1a und jener Felgenabschnitt 1b dargestellt, welcher die Wulstsitzfläche 1c aufweist. Der Wulstkern 3 besteht in an sich bekannter Weise aus Stahlseilen, das radial außerhalb des Wulstkernes 3 angeordnete und auf diesem sitzende Kernprofil 6 besteht aus einer insbesondere ein hohes Elastizitätmodul aufweisenden Gummmischung und kann ein- oder mehrteilig ausgeführt sein, bei mehrteiliger Ausführung kann das Kernprofil 6 aus Gummimischungen unterschiedlicher Elastizitätmoduli bestehen. Die Karkasseinlage 4 weist insbesondere textile Festigkeitsträger, insbesondere ein Gewebe, auf, welches in eine Gummimischung, die Karkassgummierung, eingebettet ist. Die Festigkeitsträger verlaufen in der Karkasseinlage 4 zumindest im Wesentlichen in radialer Richtung, und daher im rechten Winkel zur Umfangsrichtung des Reifens. Die Karkasseinlage 4 erstreckt sich von Wulstbereich zu Wulstbereich, verläuft radial innerhalb des Gürtelverbandes, innerhalb der Seitenwände 5 und in den Wulstbereichen von innen nach außen um die Wulstkerne 3 und in Kontakt zu diesen sowie den Kernprofilen 6. Der axial außerhalb des Kernprofils 6 verlaufende Abschnitt, der Hochschlag 4a, endet jeweils bei der Seitenwand 5. Die Innenschicht 2 verläuft an der Innenseite des Reifens entlang der Karkasseinlage 4 und endet in jedem Wulstbereich im Bereich des Umschlages der Karkasseinlage 4 um den Wulstkern 3.

Der Felgengummi 7 ist jener Teil im Wulstbereich des Fahrzeugluftreifens, welcher bei montiertem Reifen mit der Felge 1 in Kontakt kommt. Der Felgengummi 7 besteht im Wesentlichen aus einem die Wulstzehe 7c umfassenden, außerhalb des Endabschnittes der Innenschicht 2 verlaufenden Abschnitt, umschließt den Endabschnitt der Innenschicht 2 und erstreckt sich entlang des Hochschlages 4a der Karkasseinlage 4 bis zur Seitenwand 5. Hier läuft der Felgengummi 7 entlang des Hochschlages 4a über das Felgenhorn 1a hinaus und radial außerhalb des Felgenhorns 1a mit einem etwa dreieckigen Endabschnitt aus, wobei die Seitenwand 5 diesen Endabschnitt des Felgengummis 7 von außen überdeckt.

Zumindest ein Reifenbauteil, vorzugsweise der nicht gezeigte Laufstreifen des Reifens und/oder die Seitenwände 5, bestehen jeweils aus zumindest einer elektrisch nicht leitfähigen Gummimischung, insbesondere aus einer mit Kieselsäure gefüllten Gummimischung, die dem Fahrzeugluftreifen gute Fahreigenschaften, wie gute Nassrutscheigenschaften sowie einen geringen Rollwiderstand verleiht. Die mangelnde elektrische Leitfähigkeit ist mischungsbedingt und eine nachteilige Eigenschaft, da ein elektrostatisches Aufladen des Fahrzeuges durch besondere Maßnahmen vermieden werden muss. Es wird daher beispielsweise im Laufstreifen ein sogenannter Carboncenterbeam - ein Mischungsstreifen aus einer elektrisch leitfähigen Kautschukmischung - eingebaut, der zwischen der Außenseite des Laufstreifens und einem elektrisch leitfähigen Bauteil im Unterbau bzw. der Gürtelgummierung, der Karkassgummierung oder den elektrisch leitenden Karkassfäden eine elektrisch leitfähige Verbindung herstellt. Über den elektrisch leitfähigen Bauteil und eine weitere elektrisch leitfähige Gummimischung, die eine Verbindung zur Felge 1 herstellt, erfolgt die Ableitung elektrostatischer Ladungen. Unter einer elektrisch leitfähigen Gummimischung wird eine solche verstanden, welche einen spezifischen elektrischen Widerstand von höchstens 10⁶ Ωcm aufweist. Eine elektrisch nicht leitfähige Gummimischung ist eine solche, bei der der spezifische elektrische Widerstand ≥ 10⁸ Ωcm beträgt. Die elektrische Leitfähigkeit einer Gummimischung wird insbesondere durch einen entsprechenden Anteil an Ruß in der zu Grunde liegenden Kautschukmischung oder durch Zugabe von Graphit und dergleichen erreicht.

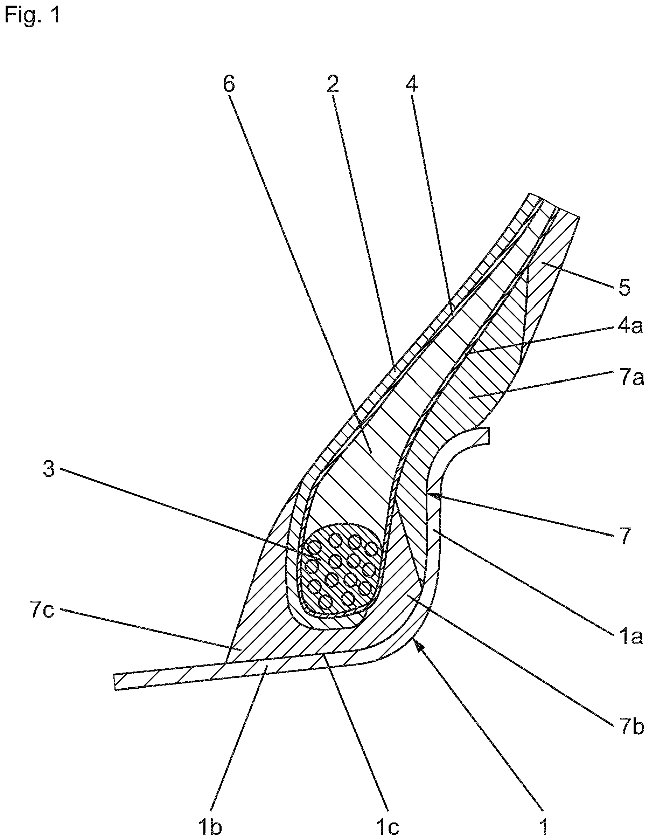

Bei der in Fig. 1 gezeigten Ausführungsform ist der Felgengummi 7 zweiteilig ausgeführt und besteht aus einem Felgengummiteil 7a und einem Felgengummiteil 7b. Über den Felgengummiteil 7b erfolgt hier beispielhaft eine elektrisch leitende Verbindung zwischen den Karkassfäden in der Karkasseinlage 4 und der Felge 1. Der Felgengummiteil 7a besteht aus einer elektrisch nicht leitfähigen Gummimischung und nimmt jenen Teil des Felgengummis 7 ein, welcher den Endabschnitt bei der Seitenwand 5 und den entlang des Felgenhorns 1a und in Kontakt zu diesem verlaufenden Abschnitt umfasst. Dabei verläuft der Felgengummiteil 7a insbesondere zumindest entlang eines Drittels der radialen Erstreckung des Felgenhorns 1a. Der Felgengummiteil 7a überlappt von außen den Felgengummiteil 7b, welcher den verbleibenden Teil des Felgengummis 7 einnimmt. Die einander überlappenden Bereiche der Felgengummiteile 7a, 7b sind im Querschnitt im Wesentlichen Dreiecke.

Wie erwähnt erstreckt sich der Felgengummiteil 7a entlang des Felgenhorns 1a und über das Felgenhorn 1a der Felge 1 hinaus. Der Teil 7a des Felgengummis 7 ist beim Betrieb des Reifens nennenswerten Verformungen ausgesetzt und besteht daher aus einer Gummimischung mit einer niedrigen Hysterese. Unter einer Gummimischung mit einer niedrigen Hysterese ist eine solche zu verstehen, deren Rückprallelastizität bei Raumtemperatur (gemäß DIN 53512) mindestens 40% und insbesondere bis zu 80% beträgt. Eine niedrige Hysterese wird bei einer Gummimischung in bekannter Weise durch den Einsatz geeigneter Kautschuke, durch Füllstoffe und deren Anteile und dergleichen erreicht. Die Gummimischung für den Felgengummiteil 7b ist hinsichtlich einer hohen elektrischen Leitfähigkeit optimiert, ihre Hysterese ist nicht von Bedeutung.

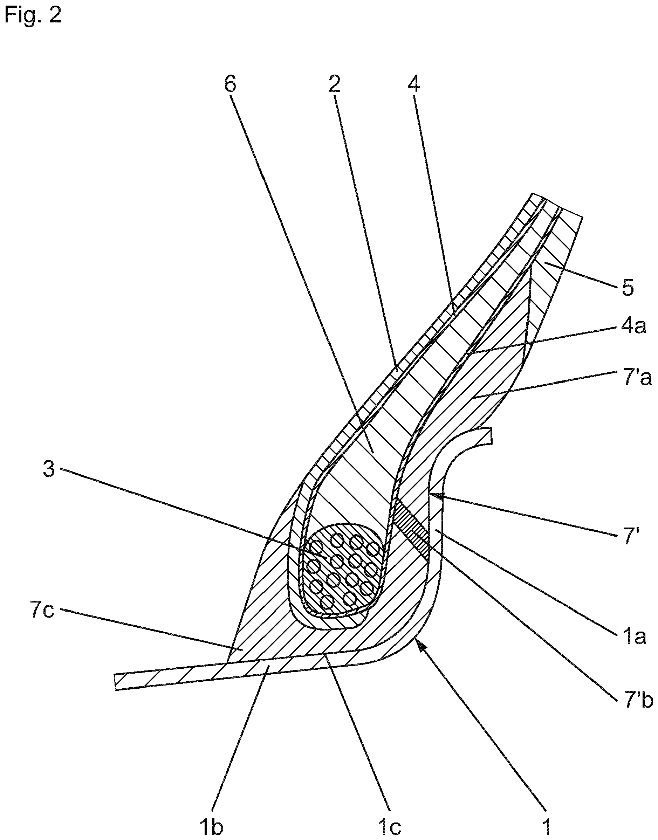

Bei der in Fig. 2 gezeigten nicht erfindungsgemäßen Ausführungsform ist ein elektrisch nicht leitender Felgengummiteil 7'a vorgesehen, welcher nahezu den gesamten Felgengummi 7' einnimmt. Der elektrisch leitfähige Felgengummiteil 7'b ist durch zumindest einen Gummistreifen 7'b gebildet, welcher den elektrisch nicht leitenden Felgengummiteil 7'a durchquert und eine elektrisch leitfähige Passage zwischen dem Felgenhorn 1a und dem Hochschlag 4a der Karkasseinlage 4 bzw. deren Karkassfäden bildet. Der Gummistreifen 7'b kann lokal an einer Stelle als schmaler Streifen eingebaut sein. Es können mehrere Gummistreifen 7'b über den Reifenumfang eingebaut sein, die mehrere elektrisch leitende Passagen bilden. Der Gummistreifen kann auch als ringförmiger Bauteil ausgeführt sein und über den gesamten Umfang des Reifens verlaufend eingebaut sein. Der Gummistreifen 7'b weist eine Querschnittsdicke von 0,5 mm bis 2,5 mm auf und besteht aus einer Gummimischung, die hinsichtlich elektrischer Leitfähigkeit optimiert ist. Der Felgengummiteil 7'a besteht aus einer Gummimischung, die hinsichtlich einer niedrigen Hysterese optimiert ist, wie bereits anhand des Felgengummiteils 7a beschrieben worden ist.

Bei der Ausführungsform gemäß Fig.1 ist es ferner vorteilhaft, wenn die Gummimischung des Felgengummiteils 7b nicht nur elektrisch leitfähig ist, sondern auch eine hohe Shore-Härte A von ≥ 60, insbesondere ≥ 65 (gemäß DIN 53505) aufweist. Diese Maßnahme verleiht dem Felgengummiteil 7b eine höhere mechanische Robustheit und ist günstig, um Beschädigungen der Wulstbereiche bei der Montage des Fahrzeugluftreifens zu vermeiden.

Bei einer weiteren möglichen Ausführungsform kann eine gesonderte, elektrisch leitfähige Gummischicht im Reifen eingelegt sein, welche zwischen dem elektrisch leitfähigen Teil des Felgengummis und dem Laufstreifenbereich verläuft.

### Bezugszeichenliste

### (Teil der Beschreibung)

- 1: Felge
- 1a: Felgenhorn
- 1b: Abschnitt
- 1c: Wulstsitzfläche
- 2: Innenschicht
- 3: Wulstkern
- 4: Karkasseinlage
- 4a: Hochschlag
- 5: Seitenwand
- 6: Kernprofil
- 7: Felgengummi
- 7: Felgengummi
- 7a, 7b: Felgengummiteil
- 7'a, 7'b: Felgengummiteil
- 7c: Wulstzehe

## Patentansprüche

1. Fahrzeugluftreifen in radialer Bauart mit zumindest einem Bauteil aus zumindest einer elektrisch nicht leitfähigen Gummimischung, mit Wulstbereichen mit Wulstkernen (3), einer um die Wulstkerne (3) verlaufenden Karkasseinlage (4) mit Hochschlägen (4a), die sich Richtung Seitenwände (5) erstrecken, mit einem Felgengummi (7, 7'), welcher die äußere Oberfläche des Wulstbereiches bildet, entlang des Karkasshochschlages (4a) verläuft und aus einem Felgengummiteil (7a, 7'a) aus einer elektrisch nicht leitfähigen Gummimischung und einem Felgengummiteil (7b, 7'b) aus einer elektrisch leitfähigen Gummimischung besteht, welcher zumindest einen im Reifen verlaufenden und elektrisch leitfähigen Bauteil, der eine elektrisch leitende Verbindung zur Außenseite des Reifens bildet oder mitbildet, mit der Felge (1) verbindet,
**dadurch gekennzeichnet,**
**dass** sich der elektrisch nicht leitende Felgengummiteil (7a, 7'a) in Richtung Seitenwand (5) über das Felgenhorn (1a) hinaus und in Kontakt mit diesem erstreckt und aus einer eine niedrige Hysterese aufweisenden Gummimischung besteht, wobei unter einer Gummimischung mit einer niedrigen Hysterese eine solche zu verstehen ist, deren Rückprallelastizität bei Raumtemperatur, gemäß DIN 53512, mindestens 40% beträgt, wobei der elektrisch leitfähige Felgengummiteil (7b) die Wulstzehe (7c) mitbildet und mit der Wulstsitzfläche (1c) der Felge (1) in Kontakt kommt.

2. Fahrzeugluftreifen nach Anspruch 1, **dadurch gekennzeichnet, dass** die Gummimischung des elektrisch nicht leitfähigen Felgengummiteils (7a, 7'a) eine Rückprallelastizität bei Raumtemperatur (gemäß DIN 53512) aufweist, die zwischen 40 % und 80 % beträgt.

3. Fahrzeugluftreifen nach Anspruch 1, **dadurch gekennzeichnet, dass** die Gummimischung des elektrisch leitfähigen Felgengummiteils (7b, 7'b) eine Shore-Härte von ≥ 60, insbesondere ≥ 65, aufweist.

4. Fahrzeugluftreifen nach einem der Ansprüche 1 bis 3, **dadurch gekennzeichnet, dass** der elektrisch leitfähige Bauteil im Reifen die Karkassgummierung ist.

5. Fahrzeugluftreifen nach einem der Ansprüche 1 bis 3, **dadurch gekennzeichnet, dass** der elektrisch leitfähige Bauteil von Karkassfäden der Karkasseinlage (4) gebildet wird.

## Claims

1. Radial pneumatic vehicle tire having at least one component made of at least one electrically non-conductive rubber mixture, comprising bead regions with bead cores (3), a carcass insert (4), which runs around the bead cores (3) and has turn-ups (4a), which extend in the direction of sidewalls (5), and a rim rubber (7, 7'), which forms the outer surface of the bead region, runs along the carcass turn-up (4a) and consists of a rim rubber part (7a, 7'a) made of an electrically non-conductive rubber mixture and a rim rubber part (7b, 7'b) made of an electrically conductive rubber mixture, which connects to the rim (1) at least one electrically conductive component that runs in the tire and forms or plays a part in forming an electrically conducting connection to the outer side of the tire,
**characterized**
**in that** the electrically non-conducting rim rubber part (7a, 7'a) extends in the direction of the sidewall (5) beyond the rim flange (1a) and in contact with it and consists of a rubber mixture having a low hysteresis, wherein a rubber mixture having a low hysteresis is understood as being one whose rebound resilience at room temperature, according to DIN 53512, is at least 40%, wherein the electrically conductive rim rubber part (7b) plays a part in forming the bead toe (7c) and comes into contact with the bead-seating surface (1c) of the rim (1).

2. Pneumatic vehicle tire according to Claim 1, **characterized in that** the rubber mixture of the electrically non-conductive rim rubber part (7a, 7'a) has a rebound resilience at room temperature (according to DIN 53512) that is between 40% and 80%.

3. Pneumatic vehicle tire according to Claim 1, **characterized in that** the rubber mixture of the electrically conductive rim rubber part (7b, 7'b) has a Shore hardness of ≥ 60, in particular ≥ 65.

4. Pneumatic vehicle tire according to one of Claims 1 to 3, **characterized in that** the electrically conductive component in the tire is the carcass rubberizing compound.

5. Pneumatic vehicle tire according to one of Claims 1 to 3, **characterized in that** the electrically conductive component is formed by carcass filaments of the carcass insert (4).

## Revendications

1. Pneumatique de véhicule de type radial avec au moins un composant provenant d'au moins un mélange de caoutchouc non électriquement conducteur, avec des zones de talon avec des noyaux de talon (3), avec une nappe de carcasse (4) s'étendant autour du noyau de talon (3) avec des cols (4a) s'étendant en direction des parois latérales (5), avec un caoutchouc de jante (7, 7') formant la surface extérieure de la zone de talon, le long du col de carcasse (4a), et composé d'une partie en caoutchouc de jante (7a, 7'a) réalisée à partir d'un mélange de caoutchouc non électriquement conducteur et d'une partie en caoutchouc de jante (7b, 7'b) réalisée à partir d'un mélange de caoutchouc électriquement conducteur, reliant au moins un composant électriquement conducteur, s'étendant dans le pneumatique et formant ou formant conjointement une liaison électriquement conductrice par rapport au côté extérieur du pneumatique, avec la jante (1), **caractérisé en ce que** la partie en caoutchouc de jante (7a, 7'a) électriquement non conductrice s'étend en direction de la paroi latérale (5) au-delà du rebord de jante (1a) et en contact avec elle et se compose d'un mélange de caoutchouc à plus faible hystérèse, sachant qu'on entend par mélange de caoutchouc à plus faible hystérèse un mélange pour lequel l'élasticité rebond est d'au moins 40 % à température ambiante selon DIN 53512, la partie en caoutchouc de jante (7b) électriquement conductrice formant conjointement le rebord du talon (7c) et entrant en contact avec la surface de portée du talon (1c) de la jante (1).

2. Pneumatique de véhicule selon la revendication 1, **caractérisé en ce que** le mélange de caoutchouc de la partie en caoutchouc de jante (7a, 7'a) non électriquement conductrice présente une élasticité rebond à température ambiante (selon DIN 53512) comprise entre 40 % et 80 %.

3. Pneumatique de véhicule selon la revendication 1, **caractérisé en ce que** le mélange de caoutchouc de la partie en caoutchouc de jante (7b, 7'b) électriquement conductrice présente une dureté Shore ≥ 60, notamment ≥ 65.

4. Pneumatique de véhicule selon l'une quelconque des revendications 1 à 3, **caractérisé en ce que** le composant électriquement conducteur dans le pneumatique est le revêtement en caoutchouc de carcasse.

5. Pneumatique de véhicule selon l'une quelconque des revendications 1 à 3, **caractérisé en ce que** le composant électriquement conducteur est formé de fils de carcasse de la nappe de carcasse (4).
